# EUROPÄISCHE PATENTSCHRIFT

(11) **EP 3 094 868 B1**
(45) Veröffentlichungstag und Bekanntmachung des Hinweises auf die Patenterteilung: **27.02.2019**
(21) Anmeldenummer: 14793568.8
(22) Anmeldetag: 05.11.2014
(51) Int. Cl.: F16B 5/06, B29C 70/84

(54) **KUNSTSTOFFBAUTEIL**
PLASTIC COMPONENT
PIÈCE EN MATIÈRE PLASTIQUE

(30) Priorität: 17.01.2014 DE 102014200772
(43) Veröffentlichungstag der Anmeldung: 23.11.2016
(73) Patentinhaber: Bayerische Motoren Werke Aktiengesellschaft, 80809 München (DE)
(72) Erfinder: KLEINKNECHT, Michael, 80335 München (DE); NIEKERK, Johann, 80993 München (DE)
(86) Internationale Anmeldenummer: PCT/EP2014/073821
(87) Internationale Veröffentlichungsnummer: WO 2015/106851

(56) Entgegenhaltungen:
- EP-A1- 1 508 429
- US-A- 4 483 904
- FERRET B ET AL: "Metal inserts in structural composite materials manufactured by RTM", COMPOSITES, IPC BUSINESS PRESS LTD. HAYWARDS HEATH, GB, Bd. 29, Nr. 5-6, 1. Januar 1998 (1998-01-01), Seiten 693-700, XP004120881, ISSN: 0010-4361, DOI: 10.1016/S1359-835X(97)00107-3

## Beschreibung

Die Erfindung betrifft ein Kunststoffbauteil mit einem Grundkörper und zumindest einem Halteelement.

Im Automobilbereich werden häufig Metallbauteile durch faserverstärkte Kunststoffbauteile ersetzt. An diesen Kunststoffbauteilen sind Halteelemente für weitere Bauteile vorgesehen. Diese Halteelemente weisen beispielsweise einen Rastbolzen, ein Gewinde oder eine andere geeignete Haltegeometrie zur Befestigung der weiteren Bauteile auf.

Bei den bisher verwendeten Metallbauteilen lassen sich solche Halteelemente einfach befestigen, beispielsweise durch Schweißen oder Löten. Die Anbringung dieser Halteelemente an Kunststoffbauteilen ist aber wesentlich aufwendiger. Das Halteelement kann beispielsweise nach der Herstellung des Kunststoffbauteils auf dieses aufgeklebt werden. Die Festigkeit dieser Klebeverbindung ist aber häufig nicht ausreichend. Eine weitere Möglichkeit ist die Herstellung einer formschlüssigen Verbindung, indem eine Bohrung in das Bauteil eingebracht und das Halteelement von einer Rückseite durch das Bauteil geführt wird, bis ein verbreiterter Flansch des Halte elements rückseitig am Bauteil anliegt. Dieses Verfahren führt aber zu einer Schwächung des Bauteils durch die Bohrung:
Beide Verfahren erfordern zudem zusätzliche Arbeitsschritte, sodass die Herstellung der Kunststoffbauteile aufwendiger wird.

Die US 4,483,904 zeigt ein Verfahren zum Befestigen eines Stabs aus glasfaserverstärktem Kunststoff in einem faserverstärkten Kunststoffbauteil. Hierbei weist der Stab ein Ende mit freiliegenden, gespreizten Glasfasern auf, die mit einem temperaturhärtenden Kunstharz getränkt und zum Aushärten in einer Ausnehmung im Kunststoffbauteil platziert werden.

Aus dem Paper von B. Ferret et al. mit dem Titel "Metal inserts in structural composite materials manufactured by RTM" ist ein Verfahren zum Befestigen eines Haltelements in einem faserverstärkten Kunststoffbauteil gezeigt, wobei ein Verankerungsabschnitt des Haltelements zwischen zwei Schichten des faserverstärkten Kunststoffbauteils eingebettet ist.

Die EP 1 508 429 A1 zeigt ein Verbindungselement aus einem faserverstärkten Kunststoff zur Verbindung von Kunststoffbauteilen, wobei das Verbindungselement ein vom Strukturbauteil abgragendes stiftförmiges Element sowie einen Verankerungsabschnitt mit einer gegenüber dem stiftförmigen Element fussartigen Verbreiterung enthält, und wobei der Verankerungsabschnitt an das stiftförmige Element anschließt und integral im Strukturbauteil verankert ist. Das stiftförmige Element ist dabei zur Erstellung einer nietartigen Verbindung des Strukturbauteils mit einem zweiten Bauteil vorgesehen.

Aufgabe der Erfindung ist es, ein Kunststoffbauteil mit einem Grundkörper und zumindest einem Halteelement bereitzustellen, das eine einfache und schnelle Herstellung sowie eine stabile Verbindung zwischen dem Grundkörper und dem Halteelement ermöglicht.

Zur Lösung der Aufgabe ist ein Kunststoffbauteil mit einem Grundkörper und zumindest einem Halteelement vorgesehen, das einen Verankerungsabschnitt und einen Halteabschnitt aufweist, wobei der Verankerungsabschnitt einen gegenüber dem Halteabschnitt vergrößerten Durchmesser aufweist und form- und/oder stoffschlüssig in den Grundkörper eingebettet oder eingebunden ist und der Halteabschnitt aus dem Grundkörper herausragt. Der Verankerungsabschnitt ist durch mehrere, insbesondere in einer Ebene angeordnete, untereinander verbundene Kugeln gebildet. Diese Kugeln können je nach aufzunehmender Belastung und Form des Kunststoffbauteils angeordnet und verbunden sein, sodass auch eine Anpassung des Verankerungsabschnitts an gewölbte oder gebogene Kunststoffbauteile möglich ist. Durch diesen Aufbau ist der Verankerungsabschnitt formschlüssig innerhalb des Grundkörpers des Kunststoffbauteils gehalten, sodass eine zuverlässige Verbindung zwischen Grundkörper und Halteelement hergestellt ist. Des Weiteren sind nach der Herstellung des Kunststoffbauteils keine zusätzlichen Arbeitsschritte erforderlich. Da der Verankerungsabschnitt zudem nicht auf das Bauteil aufgeklebt ist oder Bohrungen im Bauteil erforderlich sind, entsteht ohne Nachbearbeitung eine glatte und gleichmäßige Oberfläche des Kunststoffbauteils.

Der Halteabschnitt des Halteelements kann beispielsweise ein Gewinde aufweisen, um eine Schraube am Halteelement befestigen zu können. Vorzugsweise weist der Halteabschnitt aber eine Raststruktur auf. Die Raststruktur kann rotationssymmetrisch ausgebildet sein, sodass ein Bauteil mit beliebiger Orientierung auf den Halteabschnitt aufgesetzt werden kann. Zudem können, da das Bauteil gegenüber dem Halteabschnitt verdrehbar ist, auf den Halteabschnitt und somit das Halteelement keine Drehmomente um die Längsachse des Halteelements übertragen werden, die zu einem Lösen des Verankerungsabschnitts im Grundkörper führen könnten.

Der Halteabschnitt kann beispielsweise eine oder mehrere miteinander verbundene Kugeln aufweisen. Diese Kugeln bieten den Vorteil, dass ein Bauteil mit einer entsprechenden schalenförmigen Lagerung auf die Kugel aufgesetzt werden kann, wodurch sowohl ein Verdrehen wie auch ein Kippen des Bauteils um die Kugel des Halteabschnitts möglich ist. Neben der beweglichen Lagerung besteht ein weiterer Vorteil darin, dass durch einen solchen Halteabschnitt kein Drehmoment auf das Halteelement bzw. den Verankerungsabschnitt ausgeübt werden kann, sodass der Verankerungsabschnitt zuverlässig vor auf diesen wirkenden Drehmomenten geschützt ist.

Ist der Halteabschnitt aus mehreren Kugeln gebildet, können die Kugeln vor der Herstellung miteinander verbunden werden. Es ist aber auch möglich, dass lediglich eine Kugel mit dem Verankerungsabschnitt verbunden ist und die übrigen Kugeln nach der Herstellung des Kunststoffbauteils auf das die mit dem Verankerungsabschnitt verbundene Kugel aufgesetzt und mit dieser bzw. miteinander verbunden, beispielsweise verschweißt, werden. Prinzipiell kann lediglich ein Teil des Halteabschnitts am Verankerungsabschnitt befestigt sein, so dass der Halteabschnitt nach der Herstellung des Kunststoffbauteils aus dem Grundkörper heraus ragt. Der übrige Teil des Halteabschnitts kann nachfolgend montiert werden. Ist der Halteabschnitt aus Metall, kann dies beispielsweise durch Schweißen oder Löten erfolgen.

Vorzugsweise ist das Kunststoffbauteil ein faserverstärktes Kunststoffbauteil mit eingebundenen Faserlagen, sodass dieses einer höheren Beanspruchung standhalten kann.

Der Verankerungsabschnitt ist beispielsweise zwischen den Faserlagen angeordnet, sodass dieser besser in den Grundkörper des Kunststoffbauteils eingebunden ist und höhere Lasten übertragen kann.

Weitere Vorteile und Merkmale finden sich in der nachfolgenden Beschreibung in Verbindung mit den beigefügten Zeichnungen, wobei die zweite, dritte und vierte Ausführungsform nicht erfindungsgemäß sind. In diesen zeigen:
- Figur 1 ein erfindungsgemäßes Kunststoffbauteil,
- Figuren 2a bis 2c Detailansichten des Haltelements des Kunststoffbauteils aus Figur 1,
- Figur 3 eine Form zur Herstellung des Kunststoffbauteils aus Figur 1,
- Figuren 4a bis 4d Verfahrensschritte eines alternativen Verfahrens zur Herstellung des Kunststoffbauteils aus Figur 1,
- Figuren 5a und 5b eine zweite Ausführungsform eines Halteelements für ein Kunststoffbauteil,
- Figuren 6a und 6b eine dritte Ausführungsform eines Halteelements für ein Kunststoffbauteil, und
- Figuren 7a und 7b eine vierte Ausführungsform eines Haltelements für ein Kunststoffbauteil.

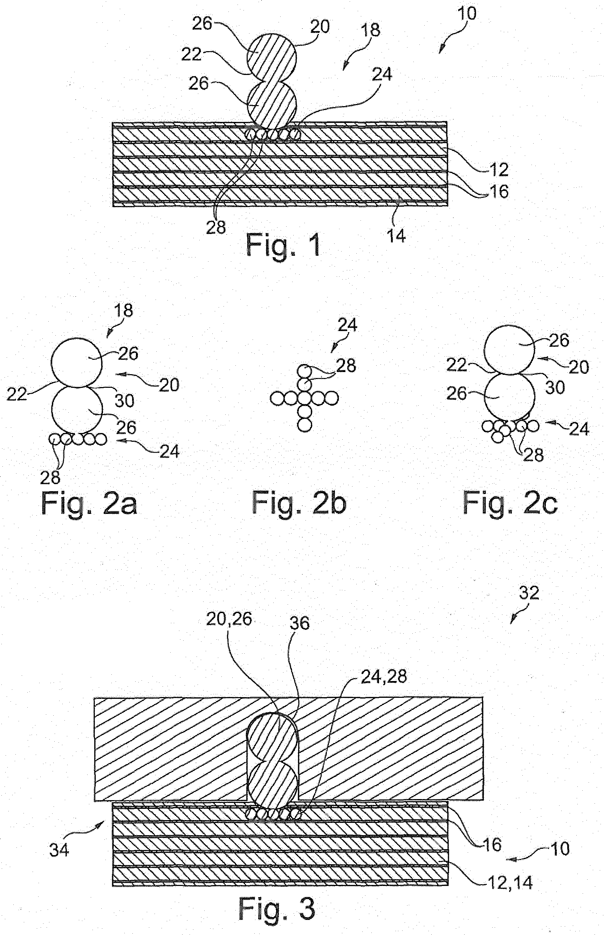

In Figur 1 ist ein Kunststoffbauteil 10 gezeigt, das einen Grundkörper 12 aufweist, der aus einem Kunststoffmaterial 14 sowie mehreren Faserlagen 16 besteht. Das Kunststoffbauteil 10 weist des Weiteren ein Halteelement 18 auf, das, wie nachfolgend erläutert wird, abschnittsweise in den Grundkörper 12 eingebettet oder eingebunden ist.

Wie in den Figuren 2a bis 2c zu sehen ist, weist das Halteelement 18 einen länglichen Halteabschnitt 20 mit einer Haltegeometrie 22 auf, an dem ein weiteres Bauteil befestigt werden kann, sowie einen Verankerungsabschnitt 24, der in den Grundkörper 12 des Kunststoffbauteil 10 eingegossen ist.

Der Halteabschnitt 20 des Halteelements 18 besteht aus zwei miteinander verbundenen Kugeln 26, die die Haltegeometrie 22 bilden. An der bezüglich Figur 1 oberen Kugel kann ein weiteres Bauteil mit einer schalenförmigen Lagerung befestigt werden. Es ist aber auch möglich, dass diese Lagerung an beiden Kugeln 26 angreift.

Der Verankerungsabschnitt 24 besteht aus mehreren, im Vergleich zu den Kugeln 26 kleineren Kugeln 28, die in dieser Ausführungsform kreuzförmig angeordnet und miteinander verbunden sind. Der Verankerungsabschnitt 24 ist der Verbindungsstelle 30, an der die zwei Kugeln 26 des Halteabschnitts miteinander verbunden sind, radial gegenüberliegend am Halteabschnitt 20 befestigt, sodass sich die Ebene, in der die Kugel 28 angeordnet sind, senkrecht zur Längsachse L des Halteabschnitts 20 erstreckt.

Wie in Figur 1 zu sehen ist, ist der Verankerungsabschnitt 24 in den Grundkörper 12 des Kunststoffbauteils 10 eingebettet, sodass dieser form- und stoffschlüssig mit dem Grundkörper 12 verbunden ist. Dadurch ist eine stabile Verbindung zwischen Grundkörper 12 und Halteelement 18 hergestellt.

Eine Form 32 zur Herstellung eines solchen Kunststoffbauteils ist in Figur 3 dargestellt. Die Form 32 hat einen Aufnahmeraum 34, der im Wesentlichen das Kunststoffbauteil 10 abbildet. An der Innenwand der Form 32 ist des Weiteren eine Aufnahme 36 vorgesehen, die das Halteelement 18 bzw. den Halteabschnitt 20 des Halteelements 18 aufnehmen kann.

Die Aufnahme 36 ist so an der Form 32 positioniert, dass das Halteelement 18 in der gewünschten Position in den Grundkörper 12 eingebettet werden kann, wenn die Form 32 mit einem flüssigen Kunststoffmaterial gefüllt wird. Dazu ragt der Verankerungsabschnitt 24 bei in die Aufnahme 36 eingesetztem Halteelement 18 aus der Aufnahme 36 in den Aufnahmeraum 34, sodass dieser vom Kunststoffmaterial 14 umschlossen werden kann.

Zur Herstellung des Kunststoffbauteils 10 wird in einem ersten Schritt das Halteelement 18 in die Aufnahme 36 eingesetzt. Anschließend werden die Faserlagen 16 in die Form 32 eingelegt, die Form 32 geschlossen und mit einem flüssigen Kunststoffmaterial 14 gefüllt. Nach dem Aushärten des Kunststoffmaterials 14 kann das fertige Kunststoffbauteil 10 aus der Form 32 entnommen werden.

Um eine besonders gute Einbindung des Verankerungsabschnitts 24 in den Grundkörper 12 zu erreichen, wird der Verankerungsabschnitt 24 vorzugsweise zwischen den Faserlagen 16 angeordnet. Dies kann beispielsweise dadurch erfolgen, dass mehrere Faserlagen 16 vor dem Einbringen des Halteelements 18 in die Aufnahme 36 in die Form 32 eingelegt werden und das Halteelement 18 durch die Faserlagen 16 hindurch in die Aufnahme 36 gedrückt wird. In den Faserlagen 16 können dazu entsprechende, zur Aufnahme 36 korrespondierende Aussparungen vorgesehen sein. Es ist aber auch möglich, dass der Halteabschnitt 20 die Fasern der Faserlagen 16 beim Eindrücken in die Aufnahme 36 verdrängt.

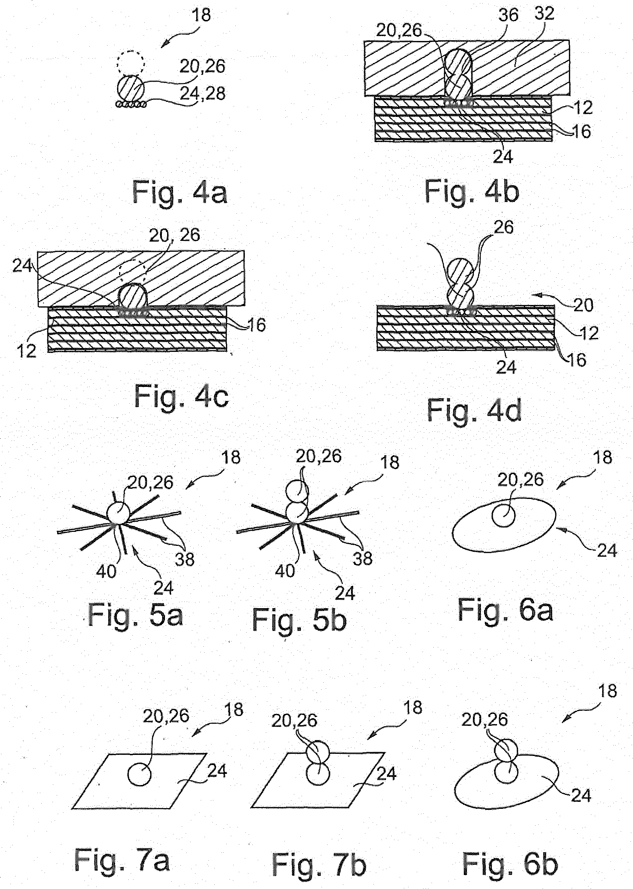

Ein alternatives Herstellungsverfahren für das in Figur 1 gezeigte Kunststoffbauteil 10 ist in den Figuren 4a bis 4d dargestellt. In dieser Ausführungsform ist lediglich eine Kugel 26 des Halteabschnitts 20 mit dem Verankerungsabschnitt 24 verbunden (Figur 4a).

In der Form 32 ist entsprechend eine Aufnahme 36 vorgesehen, die nur eine Kugel 26 aufnehmen kann (Figur 4b). Der Herstellungsprozess erfolgt analog zu dem in Figur 3 beschriebenen Herstellungsprozess.

Nach dem Aushärten des Grundkörpers 12 wird das Kunststoffbauteil 10 aus der Form entnommen und die zweite Kugel 26 des Halteabschnitts 20 mit der ersten Kugel 26 verbunden, beispielsweise auf diese aufgeschweißt.

Der Verankerungsabschnitt 24 kann beliebig ausgebildet sein, um eine stoff- und formschlüssige Verbindung zwischen Grundkörper 12 und Halteelement 18 herzustellen. Insbesondere ist dieser möglichst großflächig, sodass eine breite Lastverteilung auf den Grundkörper 12 möglich ist.

In den Figuren 5a und 5b ist eine zweite Ausführungsform eines Halteelements 18 dargestellt. Der Halteabschnitt 20 ist auch bei diesem Halteelement 18 aus einer bzw. aus zwei Kugeln 26 gebildet. Der Verankerungsabschnitt 24 ist dagegen aus mehreren, strahlenförmig angeordneten Stegen 38 gebildet, die sich im Verbindungspunkt 40 des Verankerungsabschnitts 24 mit dem Halteabschnitt 20 kreuzen.

Diese Ausführungsform sowie die in den Figuren 2a bis 2c gezeigte Ausführungsform hat den Vorteil, dass die Zwischenräume zwischen den Stegen 38 bzw. den Kugeln 28 mit Kunststoffmaterial gefüllt werden können, sodass eine bessere Einbindung des Verankerungsabschnitts 24 in den Grundkörper 12 erfolgt.

Die in den Figuren 6a und 6b gezeigte Ausführungsform eines Halteelements 18 haben dagegen einen plattenförmigen, in dieser Ausführungsform runden Verankerungsabschnitt 24.

Um zusätzliche Drehmomente auf das Halteelement 18 übertragen zu können, kann ein solcher plattenförmiger Verankerungsabschnitt 24 auch rechteckig ausgebildet sein, wie in der Ausführungsform in den Figuren 7a und 7b zu sehen ist.

In den gezeigten Ausführungsformen ist der Halteabschnitt 20 jeweils durch eine oder zwei Kugeln 26 gebildet. Diese bieten den Vorteil, dass eine sehr flexible Anbringung eines weiteren Bauteils möglich ist, da dieses um den Lagerung, mit dem das Bauteil am Halteabschnitt 20 befestigt werden kann, gedreht und begrenzt gekippt werden kann.

Es ist aber auch möglich, dass andere geeignete Halteabschnitte 20 oder Haltegeometrien verwendet werden, beispielsweise mit einer Raststruktur oder einer Haltegeometrie, die eine drehfeste Befestigung des Bauteils am Kunststoffbauteil ermöglicht.

## Patentansprüche

1. Kunststoffbauteil (10) mit einem Grundkörper (12) und einem Halteelement (18), das einen Verankerungsabschnitt (24) und einen Halteabschnitt (20) aufweist, wobei der Verankerungsabschnitt (24) einen gegenüber dem Halteabschnitt (20) vergrößerten Durchmesser aufweist und form- und/oder stoffschlüssig in den Grundkörper (12) eingebettet oder eingegossen ist und der Halteabschnitt (20) aus dem Grundkörper (12) herausragt, **dadurch gekennzeichnet, dass** der Verankerungsabschnitt (24) durch mehrere, insbesondere in einer Ebene angeordnete, untereinander verbundene Kugeln (28) gebildet ist.

2. Kunststoffbauteil nach einem der vorhergehenden Ansprüche, **dadurch gekennzeichnet, dass** der Halteabschnitt (20) eine Raststruktur aufweist.

3. Kunststoffbauteil nach einem der vorhergehenden Ansprüche, **dadurch gekennzeichnet, dass** der Halteabschnitt (20) eine oder mehrere miteinander verbundene Kugeln (26) aufweist.

4. Kunststoffbauteil nach einem der vorhergehenden Ansprüche, **dadurch gekennzeichnet, dass** das Kunststoffbauteil (10) ein faserverstärktes Kunststoffbauteil mit mehreren im Grundkörper (12) eingebundene Faserlagen (16) ist.

5. Kunststoffbauteil nach Anspruch 4, **dadurch gekennzeichnet, dass** der Verankerungsabschnitt (24) zwischen den Faserlagen (16) angeordnet ist.

## Claims

1. A plastics-material component (10) having a basic body (12) and a holding element (18) which has an anchoring portion (24) and a holding portion (20), wherein the anchoring portion (24) has a diameter which is enlarged compared with the holding portion (20) and is embedded or cast into the basic body (12) in positive manner and/or by a material-formed bond and the holding portion (20) protrudes from the basic body (12), **characterised in that** the anchoring portion (24) is formed by a plurality of interconnected spheres (28), especially arranged in one plane.

2. A plastics-material component according to one of the preceding claims, **characterised in that** the holding portion (20) has a latching structure.

3. A plastics-material component according to one of the preceding claims, **characterised in that** the holding portion (20) has one or more spheres (26) connected together.

4. A plastics-material component according to one of the preceding claims, **characterised in that** the plastics-material component (10) is a fibre-reinforced plastics-material component with a plurality of fibre layers (16) integrated in the basic body (12).

5. A plastics-material component according to Claim 4, **characterised in that** the anchoring portion (24) is arranged between the fibre layers (16).

## Revendications

1. Composant en matériau synthétique (10) comprenant un corps de base (12) et un élément de retenue (18) qui comporte un segment d'ancrage (24) et un segment de retenue (20), le segment d'ancrage (24) ayant un plus grand diamètre que le segment de retenue (20) et étant inséré ou coulé dans le corps de base (12) par une liaison par la forme et/ou par une liaison par la matière, et le segment de retenue (20) dépassant du corps de base (12),
**caractérisé en ce que**
le segment d'ancrage (24) est formé par plusieurs sphères (28) liées les unes au-dessus des autres et en particulier situées dans un plan.

2. Composant en matériau synthétique conforme à la revendication 1,
**caractérisé en ce que**
le segment de retenue (20) a une structure d'encliquetage.

3. Composant en matériau synthétique conforme à l'une des revendications précédentes,
**caractérisé en ce que**
le segment de retenue (20) comporte une sphère ou plusieurs sphères (26) reliées les unes aux autres.

4. Composant en matériau synthétique conforme à l'une des revendications précédentes,
**caractérisé en ce qu'**
il est constitué par un composant en matériau synthétique (10) renforcé par des fibres ayant plusieurs couches de fibres (16) insérées dans le corps de base (12).

5. Composant en matériau synthétique conforme à la revendication 4,
**caractérisé en ce que**
le segment d'ancrage (24) est situé entre les couches de fibres (16).
